# EUROPÄISCHE PATENTANMELDUNG

(11) **EP 0 792 974 A1**
(43) Veröffentlichungstag der Anmeldung: **03.09.1997**
(21) Anmeldenummer: 97102719.8
(22) Anmeldetag: 20.02.1997
(51) Int. Cl.: E04B 1/76, E04C 2/16

(54) **Dämmstoff aus Reishülsen zur Herstellung einer Dämmstoffschüttung, Verfahren zur Herstellung desselben sowie Verfahren zur Herstellung einer Dämmstoffschüttung aus demselben**

(30) Priorität: 01.03.1996 DE 19607963
(71) Anmelder: Klatt, Carsten, 27711 Osterholz-Scharmbeck (DE); Ziech, Frank, 29303 Bergen (DE)
(72) Erfinder: Klatt, Carsten, 27711 Osterholz-Scharmbeck (DE); Ziech, Frank, 29303 Bergen (DE)
(74) Vertreter: Hoormann, Walter, Dr.-Ing.

(57) **Zusammenfassung**

Dämmstoff aus Reishülsen zur Herstellung einer Dämmstoffschüttung, gekennzeichnet durch eine Dichte im Bereich von 200 bis 250 kg/m³ im abgepackten Zustand, Verfahren zur Herstellung desselben sowie Verfahren zur Herstellung einer Dämmstoffschüttung aus demselben.

## Beschreibung

Die vorliegende Erfindung betrifft einen Dämmstoff aus Reishülsen zur Herstellung einer Dämmstoffschüttung, ein Verfahren zur Herstellung desselben sowie ein Verfahren zur Herstellung einer Dämmstoffschüttung aus demselben.

Reishülsen fallen in reisproduzierenden Ländern in größeren Mengen an und werden zunehmend zu einem Entsorgungsproblem. Aufgrund ihrer chemischen, biologischen und physikalischen Eigenschaften, wie insbesondere ihre natürliche geringe Wärmeleitfähigkeit sowie Nichtbrennbarkeit, sind die Reishülsen prinzipiell für einen Einsatz im Baubereich prädestiniert. So wird die Verwendung von Reisspelzen für Isolierzwecke in den DE-OSS 3517778 und 3902023 beschrieben.

Aus z.B. der DE-OS 43 22 907 ist es bekannt, erwärmte, vorzugsweise auf 30 bis 60°C erwärmte, Reisspelzen in einen Hohlraum eines Gebäudes mit Druck einzufüllen. Dabei kann über ein Gebläse oder ähnliches auf diese Art und Weise eine Schüttung erreicht werden. Derartige Dämmstoffschüttungen weisen jedoch den Nachteil auf, daß sie mehr oder weniger stark sacken und somit Freiräume in der Dämmschicht schaffen, die Wärmebrücken darstellen und somit eine Isolierung uneffektiv werden lassen.

Der Erfindung liegt somit die Aufgabe zugrunde, einen gattungsgemäßen Dämmstoff, ein Verfahren zur Herstellung des Dämmstoffes sowie ein Verfahren zur Herstellung einer Dämmstoffschüttung aus demselben zur Verfügung zu stellen, mit denen eine wirksame Isolierung von Gebäudewänden erzielt wird.

Erfindungsgemäß wird diese Aufgabe bei dem Dämmstoff gelöst durch eine Dichte im Bereich von 120 bis 270 kg/m³ im abgepackten Zustand. Der Dichtebereich ist u.a. durch die von der jeweiligen Reissorte abhängige Reisschalendichte bedingt.

Diese Aufgabe wird zudem bei dem Verfahren zur Herstellung des Dämmstoffes gelöst durch ein Komprimieren von Reishülsen während des Verpackens derselben um einen Faktor im Bereich von ca. 1,2 bis 2,5.

Außerdem wird diese Aufgabe bei dem Verfahren zur Herstellung einer Dämmstoffschüttung aus dem Dämmstoff gelöst durch lagenweises Einfüllen des nicht erwärmten Dämmstoffes aus seiner Verpackung in einen Hohlraum ohne Druck und erforderlichenfalls nachfolgendes Verdichten der jeweiligen Lage auf eine Schüttdichte im Bereich von ca. 100 bis 170 kg/m³.

Vorzugsweise beträgt die Dichte des Dämmstoffes 220 kg/m³ im abgepackten Zustand.

Weiterhin kann vorgesehen sein, daß die Reishülsen einen Fungizid-Auftrag aufweisen.

Dabei kann vorgesehen sein, daß der Fungizid-Anteil im Bereich von 1 bis 10 Gew.-% liegt.

In einer besonderen Ausführungsform der Erfindung kann vorgesehen sein, daß das Fungizid Borax umfaßt.

Vorzugsweise beträgt der Borax-Anteil 5 Gew.-%.

Weiterhin kann vorgesehen sein, daß die Reishülsen einen hydrophoben Überzug aufweisen.

Schließlich kann vorgesehen sein, daß Feinstpartikel im wesentlichen nicht vorhanden sind.

Bei dem Verfahren zur Herstellung des Dämmstoffes kann ein Auftragen eines Fungizids vor dem Komprimierschritt vorgesehen sein.

Insbesondere kann ein Auftragen des Fungizids vor dem Komprimierschritt mit einem Anteil im Bereich von 1 bis 10 Gew.-% vorgesehen sein.

Insbesondere kann ein Auftragen eines in einer Flüssigkeit gelösten Fungizids vor dem Komprimierschritt vorgesehen sein.

Gemäß einer besonderen Ausführungsform der Erfindung kann das Auftragen von in Wasser gelöstem Borax vorgesehen sein.

Insbesondere kann das Auftragen des Borax mit einem Anteil von vorzugsweise 5 Gew.-% vorgesehen sein.

Weiterhin kann ein Trocknen der Reishülsen nach dem Auftragschritt auf einen normalen Wassergehalt vorgesehen sein.

Ferner kann eine Hydrophobierung der Reishülsen vor dem Trocknen vorgesehen sein.

Außerdem kann ein Trennen von Feinstpartikeln von den Reishülsen vor dem Komprimierschritt vorgesehen sein.

Insbesondere kann ein Trennen mittels Windsichtung vorgesehen sein.

Andererseits kann auch ein Trennen mittels Siebung vorgesehen sein.

Ferner kann ein Trennen von Feinstpartikeln von den Reishülsen vor dem Auftragschritt vorgesehen sein.

Der Erfindung liegt die überraschende Erkenntnis zugrunde, daß durch ein Komprimieren der Reishülsen während des Verpackens ein Sacken der nachfolgend aus dem Dämmstoff hergestellten Dämmstoffschüttungen vermieden wird. In Versuchen konnte sogar ein Expandieren der Reishülsen beobachtet werden. Die resultierenden Dämmstoffschüttungen weisen somit keine Freiräume und damit keine Wärmebrücken auf, die die Isolierung uneffektiv werden lassen. Der erfindungsgemäße Dämmstoff läßt sich darüber hinaus mit einem geringen gerätetechnischen Aufwand herstellen und weist gemäß einer besonderen Ausführungsform der Erfindung einen guten Schutz vor Pilzbefall auf. Die erfindungsgemäße Dämmstoffschüttung läßt sich auf einfache Weise, d.h. insbesondere ohne Erwärmen der Reishülsen vor dem Einfüllen sowie ohne Ausübung von Druck z.B. in Form eines Gebläses, aus dem erfindungsgemäßen Dämmstoff herstellen.

Weitere Merkmale und Vorteile der Erfindung ergeben sich aus den Ansprüchen und aus der nachstehenden Beschreibung, in der ein Ausführungsbeispiel im einzelnen erläutert ist.

Gemäß einer besonderen Ausführungsform des erfindungsgemäßen Verfahrens zur Herstellung des erfindungsgemäßen Dämmstoffes werden mittels Windsichtung Feinstpartikel von losen, beim Enthülsen und Schälen von Reiskörnern angefallenen Reishülsen, die in einem Lager gesammelt und gegebenenfalls in einem Zwischenbunker untergebracht worden sind, abgetrennt. Dadurch wird ein größerer Luftporengehalt bei der später aus dem erfindungsgemäßen Dämmstoff hergestellten Dämmstoffschüttung erreicht. Da zusätzlich auch noch kleinste Bestandteile an Kleie und ähnlichem ausgetragen werden, wird auch gewährleistet, daß Schädlinge nicht mehr die ansonsten ungenießbaren und unverdaulichen Reishülsen befallen. Anschließend werden die Reishülsen mit einem Fungizid in Form von Borax mit einem Anteil von 5 Gew.-% behandelt. Dadurch wird ein Pilzbefall vermieden, der insbesondere beim Einsatz der Reishülsen in Dachschrägen, die vor allem im Sommer eine warme und gegebenenfalls feuchte Umgebung darstellen, nicht ausgeschlossen werden kann. Darüber hinaus weist Borax auch noch eine zusätzliche feuerhemmende Wirkung auf. Nachfolgend wird eine Hydrophobierung der Reishülsen vorgenommen. Dies ist zur Erfüllung der Anforderungen für eine Baustoffzulassung notwendig. Da Borax in Wasser gelöst auf die Reishülsen aufgetragen wird, muß sich eine Trocknung der Reishülsen anschließen, die die Reishülsen wieder auf einen normalen Wassergehalt heruntertrocknet. An dieser Stelle ist darauf hinzuweisen, daß die Feuchtigkeit der Reishülsen von der relativen Luftfeuchte abhängig ist. Der letzte Schritt des Verfahrens umfaßt ein Komprimieren der Reishülsen während des Verpackens mit einem Faktor von ungefähr 1,7, so daß das Schüttgewicht der Reishülsen von ca. 130 kg/m³ im losen Zustand auf ca. 220 kg/m³ im gepreßten Zustand anwächst. Hiermit wird vermieden, daß sich die Reishülsen in der daraus hergestellten Dämmstoffschüttung setzen.

Nachfolgend wird der Dämmstoff auf einer Baustelle aus der Verpackung in einen Hohlraum eines Gebäudes ohne Erwärmen der Reishülsen und ohne Druck eingefüllt sowie lagenweise nachverdichtet, so daß die Schüttdichte bei 130 bis 150 kg/m³ liegt. Das Ergebnis ist eine lockere Schüttung in einer bleibenden, starren Wandung. Die Dämmstoffschüttung kann im Bereich von Hauswänden als Kerndämmung, Dachisolierung und Schüttung unter einem (Fußboden-)Estrich eingesetzt werden. Darüber hinaus ist ihr Einsatz als Isoliermaterial im Kesselbau (Warmwasserkessel-, -speicher und Heizungskessel) möglich.

Die Herstellung des erfindungsgemäßen Dämmstoffes aus Reishülsen sowie die Herstellung der Dämmstoffschüttung aus dem erfindungsgemäßen Dämmstoff erfordert eine relativ einfache Verfahrenstechnik, so daß der Primäraufwand zur Herstellung einer Dämmstoffschüttung - trotz der langen Transportwege für die Reishülsen, im Bereich der primärenergetisch günstigen "Öko"-Dämmstoffe liegt.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Dämmstoff aus Reishülsen zur Herstellung einer Dämmstoffschüttung, gekennzeichnet durch eine Dichte im Bereich von 120 bis 270 kg/m³ im abgepackten Zustand.

2. Dämmstoff nach Anspruch 1, dadurch gekennzeichnet, daß die Dichte 220 kg/m³ im abgepackten Zustand beträgt.

3. Dämmstoff nach Anspruch 1 oder 2, dadurch gekennzeichnet, daß die Reishülsen einen Fungizid-Auftrag aufweisen.

4. Dämmstoff nach Anspruch 3, dadurch gekennzeichnet, daß der Fungizid-Anteil im Bereich von 1 bis 10 Gew.-% liegt.

5. Dämmstoff nach Anspruch 3 oder 4, dadurch gekennzeichnet, daß das Fungizid Borax umfaßt.

6. Dämmstoff nach Anspruch 5, dadurch gekennzeichnet, daß der Borax-Anteil 5 Gew.-% beträgt.

7. Dämmstoff nach einem der vorangehenden Ansprüche, dadurch gekennzeichnet, daß die Reishülsen einen hydrophoben Überzug aufweisen.

8. Dämmstoff nach einem der vorangehenden Ansprüche, dadurch gekennzeichnet, daß Feinstpartikel im wesentlichen nicht vorhanden sind.

9. Verfahren zur Herstellung des Dämmstoffes nach einem der vorangehenden Ansprüche, gekennzeichnet durch ein Komprimieren von Reishülsen während des Verpackens derselben um einen Faktor im Bereich von 1,2 bis 2,5.

10. Verfahren nach Anspruch 9, gekennzeichnet durch ein Auftragen eines Fungizids vor dem Komprimierschritt.

11. Verfahren nach Anspruch 10, gekennzeichnet durch ein Auftragen des Fungizids vor dem Komprimierschritt mit einem Anteil im Bereich von 1 bis 10 Gew.%.

12. Verfahren nach einem der Ansprüche 9 bis 11, gekennzeichnet durch ein Auftragen eines in einer Flüssigkeit gelösten Fungizids vor dem Komprimierschritt.

13. Verfahren nach Anspruch 12, gekennzeichnet durch das Auftragen von in Wasser gelöstem Borax.

14. Verfahren nach Anspruch 13, gekennzeichnet durch das Auftragen des Borax mit einem Anteil von 5 Gew.-%.

15. Verfahren nach einem der Ansprüche 11 bis 13, gekennzeichnet durch ein Trocknen der Reishülsen nach dem Auftragschritt auf einen normalen Wassergehalt.

16. Verfahren nach Anspruch 15, gekennzeichnet durch eine Hydrophobierung der Reishülsen vor dem Trocknen.

17. Verfahren nach einem der Ansprüche 9 bis 16, gekennzeichnet durch ein Trennen von Feinstpartikeln von den Reishülsen vor dem Komprimierschritt.

18. Verfahren nach einem der Ansprüche 10 bis 17, gekennzeichnet durch ein Trennen von Feinstpartikeln von den Reishülsen vor dem Auftragschritt.

19. Verfahren nach Anspruch 18, gekennzeichnet durch ein Trennen mittels Windsichtung.

20. Verfahren nach Anspruch 18, gekennzeichnet durch ein Trennen mittels Siebung.

21. Verfahren zur Herstellung einer Dämmstoffschüttung aus dem Dämmstoff nach einem der Ansprüche 1 bis 8, gekennzeichnet durch lagenweises Einfüllen des nicht erwärmten Dämmstoffes aus seiner Verpackung in einen Hohlraum ohne Druck und erforderlichenfalls nachfolgendes Verdichten der jeweiligen Lage auf eine Schüttdichte im Bereich von 130 bis 150 kg/m³.
